## Europäisches Patentamt
## European Patent Office
## Office européen des brevets

(19)

(11) Numéro de publication: **0 113 261**
**B1**

(12)

# FASCICULE DE BREVET EUROPÉEN

(45) Date de publication du fascicule du brevet:
15.10.86

(21) Numéro de dépôt: 83402238.6

(22) Date de dépôt: 21.11.83

(51) Int. Cl.⁴: **F 16 D 65/56**

(54) Frein à disque à réglage automatique.

(30) Priorité: 23.12.82 FR 8221683

(43) Date de publication de la demande:
11.07.84 Bulletin 84/28

(45) Mention de la délivrance du brevet:
15.10.86 Bulletin 86/42

(84) Etats contractants désignés:
DE FR GB IT NL SE

(56) Documents cité:
DE-A-1 750 056
FR-A-2 326 624
FR-A-2 402 806

(73) Titulaire: BENDIX France, 126, rue de Stalingrad,
F-93700 Drancy (FR)

(72) Inventeur: Carré, Jean- Jacques, 59 Bld de l'Est,
F-93340 Le Raincy (FR)
Inventeur: Pressaco, Pierre, 45 rue E. Zola, F-93120
La Courneuve (FR)

(74) Mandataire: Poidatz, Emmanuel, Service Brevets
Bendix 44 rue François 1er, F-75008 Paris (FR)

## Description

La présente invention concerne les freins à disque, et, plus particulièrement, un frein a disque à réglage automatique du type comportant un frein à disque à réglage automatique comportant un étrier monté coulissant sur un support fixe au moyen d'au moins une colonnette axiale, un moteur de frein agissant directement sur un premier élément de friction et par réaction au travers de l'étrier sur un second élément de friction, le moteur de frein comportant un piston de commande hydraulique actionnable par une pression hydraulique de freinage et par une commande mécanique agissant sur le piston de commande au travers d'un dispositif de réglage automatique formè par par un système vis-écrou à pas reversible susceptible d'être mis en oeuvre par le piston hydraulique au delà d'une course prédéterminée de ce dernier, et, un moyen, sensible à la pression hydraulique de freinage, pour neutraliser le dispositif de réglage automatique.

Un frein à disque de ce type est dècrit dans le document FR-A-2 402 806, au nom de la demanderesse. Dans ce document, le moyen de neutralisation du dispositif de réglage automatique est constitué d'un tube de Bourdon annulaire susceptible de coopérer en engagement de friction avec la périphérie de l'écrou du dispositif de réglage automatique lorsque la pression hydraulique de freinage atteint un certain seuil, de sorte que le réglage automatique n'intervient que pour des pressions de freinage faibles, afin de compense, l'usure des éléments de friction, et non pas pour des pressions de freinage importantes, en évitant ainsi d'effectuer des sur-réglages induits par la déformation, sous de telles fortes pressions, de l'étrier du frein. Toutefois, les moyens de neutralisation de ce document présentent les inconvénients suivants: le système étant basé sur la friction du tube Bourdon sur le dispositif de réglage, le niveau de friction peut évoluer dans le temps et affecter ainsi le jeu fonctionnel que l'on désire avoir entre le disque tournant et les éléments de friction; de même la fabrication d'un tube de Bourdon de ce type se révèle onéreuse et fragile, et présente des dispersions notables qui peuvent être sensibles sur l'èquilibre des couples de freinage de deux roues d'un même essieu; enfin, avec ce type de dispositif, il est difficile de faire varier le niveau de la pression hydraulique pour laquelle on souhaite interdire le fonctionnement du réglage automatique selon le type de frein considéré.

La présente invention a pour objet de proposer un frein à disque à réglage automatique et à commande mixte hydraulique/mécanique du type considéré obviant aux inconvénients précités, de construction simple, robuste et fiable, adaptable à la plupart des freins préexistants du type considéré, et permettant·de modifier aisèment le seuil de pression hydraulique mettant en oeuvre le moyen de neutralisation.

Pour ce faire, selon une caractéristique de l'invention, le dispositif de réglage automatique comporte un douille solidaire en rotation de l'écrou et coopérant avec un piston de contrôle à déplacement linéaire ayant une extrémité exposée à la pression hydraulique de freinage et immobilisant la douille en rotation et en translation lorsque la pression hydraulique de freinage atteint une valeur prédéterminée.

On comprend que grâce à un tel agencement la section active du piston de contrôle, exposée à la pression de freinage, est facilement modifiable pour ajuster la neutralisation du réglage automatique au niveau de pression désirée, cette section active n'évoluant pas dans le temps et la fabrication de l'ensemble, et en particulier du dispositif de neutralisation, est simplifiée, assurant ainsi la fiabilité du système sans affecter par ailleurs le fonctionnement du frein.

Le document FR-A-2 326 624 décrit, par ailleurs, un moteur de frein à mise en oeuvre uniquement hydraulique comportant un dispositif de réglage automatique à vis et écrou et un moyen de neutralisation de ce dispositif de réglage automatique sensible à la pression de freinage et comprenant une douille associée à l'écrou et susceptible d'être immobilisée en rotation et en translation par déplacement de la vis elle-même sous l'effet de la pression hydraulique de freinage. Le système de ce document n'autorise donc pas un actionnement mixte hydraulique et mécanique, et une modification du seuil de pression de neutralisation impose une modification des dimensions de la vis, et donc de l'ensemble du moteur de frein.

D'autres caractéristiques et avantages de la présente invention, apparaîtront à la lecture de la description détaillée suivante en se référant aux dessins annexés dans lesquels

- la figure 1 est une vue de dessus d'un frein à disque réalisé conformément aux enseignements de la présente invention; et
- la figure 2 est une vue en coupe agrandie selon la ligne 2-2 de la figure 1.

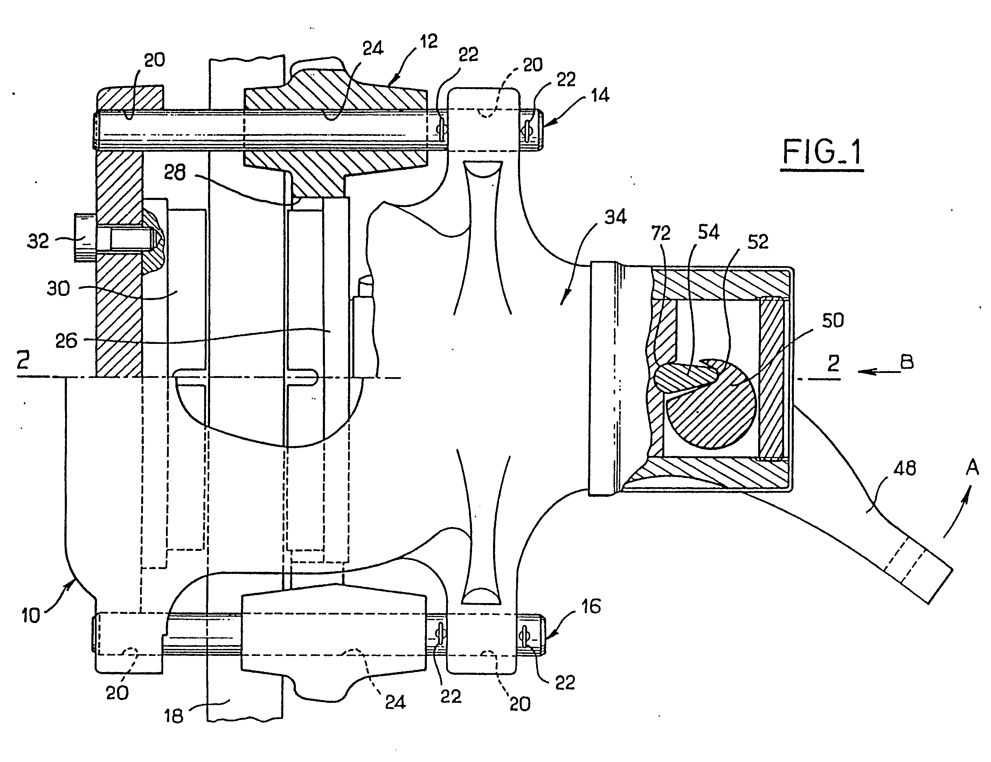

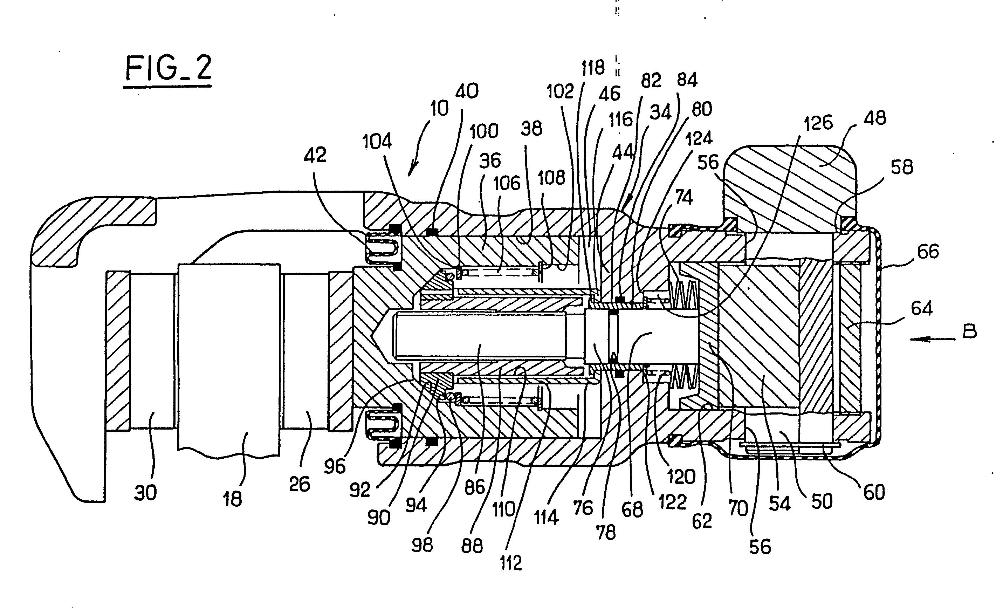

Le frein à disque représenté sur les figures 1 et 2 comprend un étrier mobile 10 monté coulissant sur un organe ou support fixe 12 au moyen de deux colonnettes 14 et 16 s'étendant parallèlement à l'axe de rotation du disque tournant 18. Dans le mode de réalisation représenté et comme le montre plus particulièrement la figure 1, les colonnettes axiales 14 et 16, solidaires de l'étrier 10 au moyen de perçages 20 et de goupilles 22, passent dans des alésages 24 formés dans le support fixe 12 et sont susceptibles de coulisser par rapport à ces alésages 24 et donc par rapport au support fixe 12. Un premier élément de friction 26 est monté dans une ouverture 28 formée dans le support fixe 12, cette ouverture 28 assurant l'ancrage et le coulissement de l'élément de friction 26. Un deuxième élément de friction 30 est fixé sur l'étrier 10 au moyen de deux vis 32 qui assurent l'ancrage de l'élément de friction 30 sur l'étrier 10. En outre, l'étrier 10 est équipé d'un moteur de frein 34 comportant une commande hydraulique et une commande mécanique comme on le verra plus précisément sur la figure 2. D'une façon conventionnelle, la ccmmande hydraulique est assurée par un piston de commande hydraulique 36 monté coulissant dans un alésage 38 formé dans le moteur de frein 34. L'étanchéité entre le piston 36 et l'alésage 38 est assurée par un joint 40, le piston étant par ailleurs protégé par un capuchon de piston 42. Le piston 36 et une paroi 44 de fond de l'alésage 38 définissent une chambre 46 susceptible d'être reliée à une source de pression (non représentée) comme par exemple le maître-cylindre du véhicule.

La ccmmande mécanique est assurée au moyen d'un levier 48 susceptible d'être relié à un câble ou analogue (non représenté) solidaire d'un axe 50 dans lequel est formée une rainure 52 recevant une biellette allongée 54. L'axe 50 est reçu dans deux alésages 56 formés dans le moteur de frein 34. L'axe 50 est immobilisé longitudinalement par rapport au moteur de frein au moyen d'un épaulement 58 formé sur le levier 48 d'une part et d'autre part au moyen d'un circlips ou analogue 60. L'axe 50 et la biellette allongée 54 sont logés dans un alesage borgne 62 formé dans le moteur de frein 34, la partie ouverte de l'alésage est pourvue d'un obturateur 64 vissé dans le mode de réalisation représenté. L'ensemble levier, axe et l'alésage 62 sont protégés par un capuchon flexible 66. L'alésage 62 reçoit également une vis 68 dont une portion épanouie 70 comporte une rainure 72 qui coopère avec la biellette 54. Entre le fond de l'alésage borgne 62 et la portion épanouie 70 est placé un ressort de rappel 74. La vis 68 comporte une portion cylindrique 76 dans laquelle est formée une gorge comportant un joint 78. Ce joint 78 et la partie cylindrique 76 sont susceptibles de coulisser par rapport à un piston annulaire 80 monté dans un alésage 82 de la paroi 44. Un joint 84 est monté dans l'alésage 82 de manière à rendre étanche le coulissement éventuel du piston annulaire 80 par rapport à l'alésage 82. La vis 68 se prolonge dans la chambre 46 par une portion filetée 86 à pas réversible sur laquelle est monté un écrou 88. L'écrou 88 porte sur son extrémité opposée à la paroi 44 une pièce rapportée 90 comportant d'une part une portion en cône 92 et d'autre part un chemin de roulement 94. La portion en cône 92 est susceptible de coopérer avec une portion en cône 96 formée dans le piston 36. Le chemin de roulement 94 est susceptible de coopérer avec une butée à bille 98 coaxiale à la portion filetée 86 et placée en vis-à-vis d'une rondelle 100 formant un deuxième chemin de roulement susceptible de coulisser dans un alésage 102 formé dans le piston 36. La rondelle 100 est appliquée sur un épaulement 104 de l'alésage 102 au moyen d'un ressort 106 lui-même prenant appui sur un circlips ou analogue 108 monté dans une gorge formée dans l'alésage 102 du piston 36. Lorsque la rondelle 100 est en appui sur l'épaulement 104, et que la portion en cône 92 est en appui sur la portion en cône 96, on prévoit un jeu entre la butée à bille 98 et la rondelle 100 de manière à définir le jeu fonctionnel du frein. Outre la pièce rapportée 90 l'écrou 88 comporte dans le mode de réalisation représenté une pluralité de rainures 110 dans lesquelles sont montées des pattes 112 d'une douille 114 susceptibles de coulisser par rapport à l'écrou 88 mais solidaires en rotation avec celui-ci. La douille 114 porte sur son extrémité proche de la paroi 44 une collerette 116 rabattue radialement vers l'intérieur, placée entre la paroi 44 et une collerette 118 rabattue radialement vers l'extérieur formée sur une extrémité du piston annulaire 80. L'autre extrémité du piston annulaire est sollicitée vers la gauche en se reportant à la figure 2 au moyen d'un ressort de contrôle 120 placé entre le ressort 74 et une rondelle 122 d'un diamètre extérieur supérieur au diamètre extérieur de la portion cylindrique du piston annulaire 80 de façon à ce que l'extrémité du piston annulaire soit alignée avec la paroi 124 d'un chambrage 126 formé dans le fond de l'alésage 62, le piston annulaire 80 formant piston de contrôle du dispositif de réglage automatique.

Le frein qui vient d'être décrit fonctionne de la façon suivante:

Au repos, les différents éléments du frein occupent les positions représentées sur les figures 1 et 2.

Lorsque le frein est actionné au moyen de la commande mécanique, le levier 48 est tourné dans le sens de la flèche A de la figure 1. Cette rotation entraine une rotation de l'axe 50 dans le sens contraire des aiguilles d'une montre. Cette rotation au travers de la rainure 52 pousse la biellette 54 dans une direction générale représentée par la flèche B de la figure 1. La biellette 54 au travers de la rainure 72 pousse la portion épanouie 70 de la vis 68 à l'encontre du ressort 74. Comme la portion cylindrique 76 la vis 68 peut coulisser par rapport au piston annulaire de contrôle 80, la vis 68 se déplace également dans le sens de la flèche B reportée également sur la figure 2. Ce mouvement de la vis 68 au moyen de la portion filetée 86 est transmis à l'écrou 88 dont la partie rapportée 90 vient en appui sur le piston 38 au travers des deux portions coniques placées en vis-à-vis 92 et 96. La friction apparaissant entre les deux portions coniques interdit la rotation de l'écrou 88 par rapport à la vis 68 et par conséquent l'effort engendré sur la biellette 54 est transmis au piston 36 et donc à l'élément de friction 26 qui lui est adjacent. La réaction de l'élément de friction 26 sur le disque 28 entraîne une contre-réaction de l'axe 50 sur le moteur de frein 34 et plus précisément sur les alésages 58 de ce moteur 34. L'étrier 10 coulisse alors avec ses colonnettes 14 et 16 par rapport au support fixe 12 de manière à appliquer l'élément de friction 30 sur la face opposée du disque 18. Au relâchement de la commande manuelle les différents éléments du frein reprennent les positions représentées sur les figures 1 et 2 au moyen du ressort de rappel 74.

Lorsque le frein est actionné au moyen de la commande hydraulique une pression hydraulique est appliquée dans la chambre 46 de manière à solliciter le piston 38 vers la gauche en se référant à la figure 2. Si le mouvement du piston 36 par rapport à l'écrou 88 ne dépasse pas le jeu fonctionnel défini entre la butée à bille 98 et la rondelle 100 le mouvement du piston 36 n'a aucun effet sur le réglage automatique, seules les portions coniques 92 et 96 sont décollées l'une de l'autre. Si le mouvement du piston 36 est supérieur au jeu fonctionnel prédéterminé l'écrou 88 est entraîné vers la gauche en se référant à la figure 2 par le piston 36 au travers de la pièce 90, de la butée 98, de la rondelle 100 et du ressort 106, lui-même entraîné par le circlips 108 solidaire du piston. La vis 68 étant immobilisée axialement au moyen du ressort 74, l'écrou 88 grâce au pas réversible, tourne par rapport à la vis 68 pour pouvoir suivre le mouvement du piston 36. Dans cette phase de fonctionnement, la douille 114 est libre de tourner avec l'écrou 88, le ressort de contrôle 120 ayant repoussé le piston annulaire de contrôle 80 vers la gauche en se référant à la figure 2, la collerette 118 de ce piston annulaire n'appliquant pas la collerette 116 de la douille 114 sur la paroi 44 du moteur de frein. Si la pression hydraulique est alors relâchée, le joint 40 de façon conventionnelle fait légèrement revenir le piston 36, la partie conique 96 de celui-ci venant en contact avec la partie conique 92 de l'écrou interdisant à celui-ci de tourner. Comme à l'application du freinage, l'écrou a tourné en se déplaçant vers la gauche, le dispositif de réglage automatique se trouve donc maintenant dans une nouvelle position décalée vers la gauche et interdit au piston de reprendre sa position initiale.

Si, par contre, le relâchement du freinage n'intervient pas immédiatement, la pression dans la chambre 46 continue à monter et sous l'effet de cette pression et de l'effort engendré par le piston 36 l'étrier se déforme. Il est donc nécessaire de bloquer le fonctionnement du réglage avant le début de la déformation mécanique de l'étrier.

Lorsque la pression dans la chambre 46 atteint le niveau défini par la section annulaire du piston annulaire de contrôle 80 et de l'effort du ressort de contrôle 120, le piston annulaire 80 se déplace sous l'effet de cette pression vers la droite en se référant à la figure 2 et pince au moyen de sa collerette 118 la collerette 116 de la douille 114 contre la paroi 44 du moteur de frein. La douille 114 étant alors immobilisée en rotation et axialement par le piston annulaire 80, toute rotation de l'écrou 88 devient impossible du fait des rainures 110 et des languettes 112 associées. L'écrou 88 étant dans l'impossibilité de tourner ne peut plus suivre le piston 36. La pièce rapportée 90 de l'écrou 88 par l'intermédiaire de la butée à bille 98 et de la rondelle 100 comprime le ressort 106. Le piston 36 se déplace vers la gauche sous l'effet de la pression regnant dans la chambre 46 engendrant des deformations dans l'étrier du fait des efforts mis en jeu sans mettre en oeuvre le réglage automatique, l'effort de pincement engendré par le piston annulaire et plus précisément par sa collerette 118 sur la collerette 116 de la douille 114 étant supérieur à l'effort du ressort 106. Au relâchement de la pression hydraulique dans un premier temps le ressort 106 se détend et amène la rondelle 100 en appui sur l'épaulement 104, l'écrou 88 n'est alors plus soumis à un effort axial transmis par la butée 98 mais reste sans jeu entre le chemin de roulement 94, la butée à bille 98 et la rondelle 100. Dans un deuxième temps, le joint 40 ramène le piston 36 vers la droite de la figure 2 dune façon conventionnelle jusqu'à ce que la partie conique 96 du piston vienne en appui sur la partie conique 92 de la pièce 90. Le jeu fonctionnel apparaît maintenant entre la butée à bille 98 et la rondelle 100. Dans un troisième temps, la pression continuant à décroître le ressort de contrôle 120 en repoussant la rondelle 122 déplace le piston annulaire 80 vers la gauche de la figure 2 libérant ainsi la collerette 116 qui de nouveau est libre de tourner avec l'écrou 88 si celui-ci est sollicité en rotation.

Comme on le voit de la description qui précède, le dispositif objet de l'invention est particulièrement fiable du fait de la simplicité des pièces obtenues par des moyens de fabrication élémentaires. Il est particulièrement aisé par changement de la surface active du piston annulaire et par l'adaptation du ressort de rappel de ce piston annulaire d'adapter la valeur de la pression prédéterminée pour laquelle le dispositif de réglage automatique devient inopérant. De même on conçoit aisément que les collerettes 116 et 118 peuvent être inversées, c'est-à-dire que la collerette du piston annulaire peut être rabattue radialement vers l'intérieur et la collerette de la douille 114 rabattue radialement vers l'extérieur, ceci dans le cas où la portion cylindrique 76 de la vis 68 présente un diamètre supérieur à celui de la douille 114. Enfin, on peut prévoir tout dispositif sur les collerettes et sur la paroi 44 du cylindre pour obtenir un blocage de la douille 114 même pour des pressions hydrauliques très faibles.

Il est bien évident que la commande mécanique décrite cidessus peut être remplacée par tout autre commande engendrant un effort axial sur la vis dans le sens de la flèche B de la figure 2.

**Revendications**

1. Frein à disque réglage automatique comportant un étrier (10) monté coulissant sur un support fixe (12) au moyen d'au moins une colonnette axiale (14, 16), un moteur de frein (34) agissant directement sur un premier élément de friction (26) et par réaction au travers de l'étrier (10) sur un second élément de friction (30), le moteur de frein (34) comportant un piston de commande hydraulique (36) actionnable par une pression hydraulique de freinage et par une commande mécanique (48-50-54) agissant sur le piston de commande (36) au travers d'un dispositif de réglage automatique, formé par un système vis (68)-écrou (88) à pas réversible susceptible d'être mis en oeuvre par le piston hydraulique (36) au delà d'une course prédéterminée de ce dernier, et un moyen, sensible à la pression hydraulique de freinage, pour neutraliser le dispositif de réglage automatique, caractérisé en ce que le dispositif de réglage automatique comporte une douille (114) solidaire en rotation de l'écrou (88) et coopérant avec un piston de contrôle à déplacement linéaire (80), ayant une extrémité exposée à la pression hydraulique de freinage, immobilisant la douille (114) en rotation et en translation lorsque la pression hydraulique de freinage atteint une valeur prédéterminée.

2. Frein à disque selon la revendication 1, caractérisé en ce que la douille (114) ou l'écrou (88) présente au moins une saille (112) susceptible de coopérer avec une rainure (110) axiale formée sur l'écrou (88) ou sur la douille (114) assurant le verrouillage angulaire relatif de la douille (114) sur l'écrou (88).

3. Frein à disque selon la revendication 1 ou la revendication 2, caractérisé en ce que la douille (114) présente à une de ses extrémités au moins une portion de collerette (116) susceptible de coopérer avec un élément de retenue (118) porté par le piston de contrôle (80).

4. Frein à disque selon l'une des revendications 1 à 3, caractérisé en ce que le piston de contrôle (80) est monté de façon à coulisser axialement de façon étanche, parallèlement à la vis (68), dans une paroi (44) du moteur de frein (34) traversée par la vis (68).

5. Frein à disque selon la revendication 4, caractérisé en ce que le piston de contrôle (80) est constitué d'une douille coaxiale à la vis (68), formant ainsi un piston annulaire, l'élément de retenue étant formé par une portion de collerette (118) du piston de contrôle (80) et étant susceptible d'immobiliser axialement et angulairement la portion de collerette (116) de la douille (114) par pincement contre la paroi (44) du moteur de frein (34) lorsque ladite pression prédéterminée est atteinte.

6. Frein à disque selon la revendication 5, caractérisé en ce qu'un ressort de contrôle (120) sollicite axialement ledit piston de contrôle (80) en éloignement de ladite paroi (44).

7. Frein à disque selon la revendication 6, caractérisé en ce que d'une manière connue en soi ladite vis (68) est maintenue dans une première position au moyen d'un ressort de rappel (74) lorsque la commande mécanique n'est pas actionnée, ladite vis (68) étant susceptible de se déplacer à l'encontre dudit ressort (74) lors de l'actionnement de la ccmmande mécanique et en ce que ledit ressort de contrôle (120) prend appui par une de ses extrémités sur ledit ressort de rappel (74) et par l'autre de ses extrémités sur ledit piston de contrôle (80) au travers d'un élément annulaire (122).

8. Frein à disque selon l'une quelconque des revendications précédentes, caractérisé en ce que ledit écrou (88) comporte une portion conique (92) susceptible de coopérer avec une autre portion conique (96) portée par le piston de commande (36), ledit écrou (88) comportant un chemin de roulement (94) pour une butée axiale à billes (98) montée avec un jeu axial entre ledit chemin de roulement (94) et un deuxième chemin de roulement formé par un élément annulaire (100) susceptible de coulisser par rapport audit piston de commande (36) à l'encontre d'un ressort (106) lorsque apparaît un mouvement relatif entre ledit écrou (88) et ledit piston (36) supérieur audit jeu axial.

9. Frein à disque selon l'une des revendications précédentes, caractérisé en ce que ladite vis (68) est immobilisée en rotation au moyen d'une biellette (54) allongée coopérant par une de ses extrémités avec une rainure (72) formée sur une portion évasée (70) de ladite vis (68), ladite biellette (54) coopérant par son autre extrémité avec une seconde rainure (52) formée sur un axe (50) solidaire d'un levier de commande mécanique (48).

**Patentansprüche**

1. Selbsttätig nachstellbare Scheibenbremse mit einem Bremssattel (10), der auf einem festen Bremsträger (12) mittels mindestens eines axialen Bolzens (14,16) gleitend gelagert ist, einem Bremsmotor (34), der unmittelbar auf einen ersten Bremsbacken (26) und durch Reaktion über den Bremssattel (10) auf einen zweiten Bremsbacken (30) einwirkt, wobei der Bremsmotor (34) einen hydraulischen Betätigungskolben (36) aufweist, der betätigbar ist durch hydraulischen Bremsdruck und durch eine mechanische Betätigungsvorrichtung (48-50-54), die auf den Betätigungskolben (36) über eine selbsttätige Nachstellvorrichtung einwirkt, die gebildet wird von einem Spindel(68)-Mutter(88)-System, das von dem hydraulischen Kolben (36) jenseits eines vorgegebenen Hubes desselben betätigt wird, sowie einem auf den hydraulischen Bremsdruck ansprechenden Mittel zum Außerkraftsetzen der selbsttätigen Nachstellvorrichtung, dadurch gekennzeichnet, daß die selbsttätige Nachstellvorrichtung eine Hülse (114) aufweist, die mit der Mutter (88) drehfast verbunden ist und mit einem linear verschiebbaren Steuerkolben (80) zusammenwirkt, der mit einem Ende dem hydraulischen Bremsdruck ausgesetzt ist, wodurch die Hülse (140) hinsichtlich einer Dreh- und Translationsbewegung festgelegt wird, wenn der hydraulische Bremsdruck einen vorgegebenen Wert erreicht.

2. Scheibenbremse nach Anspruch 1, dadurch gekennzeichnet, daß die Hülse (114) oder die Mutter (88) mindesten einen Vorsprung (112) aufweist, der mit einer an der Mutter (88) oder der Hülse (114) gebildeten Axialnut (110) zusammenwirkt, um die drehfeste Verbindung zwischen der Hülse (114) und der Mutter (88) sicherzustellen.

3. Scheibenbremse nach Anspruch 1 oder 2, dadurch gekennzeichnet, daß die Hülse (114) an einer ihrer Enden mindestens einen Kragenabschnitt (116) aufweist, der mit einem vom Steuerkolben (80) getragenen Halteteil (118) zusammenwirkt.

4. Scheibenbremse nach einem der Ansprüche 1-3, dadurch gekennzeichnet, daß der Steuerkolben (80) parallel verlaufend zur Spindel (88) abgedichtet in einer von der Spindel (68) durchdrungenen Wand (44) des Bremsmotors (34) axial gleitend gelagert ist.

5. Scheibenbremse nach Anspruch 4, dadurch gekennzeichnet, daß der Steuerkolben (80) aus einer zur Spindel (68) koaxialen Hülse besteht, die somit einen Ringkolben bildet, wobei das Halteteil von einem Kragenabschnitt (118) des Steuerkolbens (80) gebildet wird und in der Lage ist, den Kragenabschnitt (116) der Hülse (114) durch Festklemmen an der Wand (44) des Bremsmotors (34) axial und in Umfangsrichtung festzulegen, wenn der vorgegebene Druck erreicht ist.

6. Scheibenbremse nach Anspruch 5, dadurch gekennzeichnet, daß eine Steuerfeder (120) den Steuerkolben (80) axial von der Wand (44) wegdrückt.

7. Scheibenbremse nach Anspruch 6, dadurch gekennzeichnet, daß in an sich bekannter Weise die Spindel (68) mittels einer Rückholfeder (74) in einer ersten Stellung gehalten wird, wenn die mechanische Betätigungsvorrichtung nicht betätigt wird, wobei die Spindel (68) bei einer Betätigung der mechanischen Betätigungsvorrichtung entgegen dieser Feder (74) verschiebbar ist, und daß die Steuerfeder (120) mit einem ihrer Enden an der Rückholfeder (74) anliegt und mit ihrem anderen Ende über ein Ringteil (122) an dem Steuer kolben (80) angreift.

8. Scheibenbremse nach einem der vorhergehenden Ansprüche, dadurch gekennzeichnet, daß die Mutter (88) einen konischen Abschnitt (92) aufweist, der mit einem von dem Betätigungskolben (36) getragenen anderen konischen Abschnitt (96) zusammenwirkt, wobei die Mutter (88) eine Laufbahn (94) für ein axiales Kugeldrucklager (98) aufweist, das mit axialem Spiel zwischen der Laufbahn (94) und einer zweiten Laufbahn angeordnet ist, die von einem Ringteil (100) gebildet wird, das bezüglich des Betätigungskolbens (36) entgegen der Wirkung einer Feder (106) gleitbar ist, wenn eine Relativbewegung zwischen der Mutter (88) und dem Betätigungskolben (36) auftritt, die größer ist als das besagte axiale Spiel.

9. Scheibenbremse nach einem der vorhergehenden Ansprüche, dadurch gekennzeichnet, daß die Spindel (68) gegen eine Drehbewegung mittels eines Kurbelarms (54) gesichert ist, der über eines seiner Enden mit einer Nut (72) zusammenwirkt, die in einem ausgenommenen Abschnitt (70) der Spindel (68) gebildet ist, wobei der Kurbelarm (54) an seinem anderen Ende mit einer zweiten Nut (52) zusammenwirkt, die an einer mit einer mechanischen Betätigungshebel (48) fest verbundenen Achse (50) gebildet ist.

**Claims**

1. Automatically adjustable disc brake comprising a caliper (10) slidingly mounted on a fixed support (12) by means of at least one axial column (14,16), a brake motor (34) acting directly on a first friction member (26) and by reaction via the caliper (10) on a second friction member (30), the brake motor (34) comprising a hydralic actuating piston (36) actuatable by a hydralic break pressure and by a mechanical actuating device (48-50-54) acting on the actuating piston (36) via an automatic adjustment device formed by a screw (68)-nut (88)-system adapted to be operated by the hydraulic piston (36) beyond a predetermined stroke of the latter, and a means responsive to the hydraulic brake pressure for neutralizing the automatic adjustment device, characterized in that the automatic adjustment device comprises a sleeve (114) non-rotatably connected to the nut (88) and cooperating with a linearly displaceable control piston (80) having one end exposed to the hydraulic brake pressure thereby to immobilize the sleeve (114) in respect of rotational and translatory movements when the hydraulic brake pressure attains a predetermined value.

2. Disc brake according to claim 1, characterized in that the sleeve (114) or the nut (88) presents at least one projection (112) adapted to cooperate with an axial groove (110) formed on the nut (88) or on the sleeve (114) to assure relative circumferential locking of the sleeve (114) on the nut (88).

3. Disc brake according to claim 1 or claim 2, characterized in that the sleave (114) has at one of its ends at least one flange portion (116) adapted to cooperate with a retaining member (118) supported by the control piston (80).

4. Disc brake according to any of claims 1 to 3, characterized in that the control piston (80) is axially slidingly mounted in fluid-tight manner and parallel to the screw (68) in a wall (44) of the brake motor (34) through which the screw (68) extends.

5. Disc brake according to claim 4, characterized in that the control piston (80) is comprised of a sleeve coaxial to the screw (68) so as to form an annular piston, the retaining member being forned by a flange portion (118) of the control piston (80) and being adapted to axially and circumferentially immobilize the flange portion (116) of the sleeve (114) by clamping against the wall (44) of the brake motor (34) when said predetermined pressure is attained.

6. Disc brake according to claim 5, characterized in that a control spring (120) axially biases said control piston (80) away from said wall (44).

7. Disc brake according to claim 6, characterized in that, in a manner known per se, said screw (68) is maintained in a first position by means of a return spring (74) when the mechanical actuating device is not actuated, said screw (68) being adapted to displace against said spring (74) during actuation of the mechanical actuating device, and in that said control spring (120) engages at one of its ends said return spring (74) and at its other end said control piston (80) via an annular member (122).

8. Disc brake according to any of the preceding claims, characterized in that said nut (88) comprises a conical portion (92) adapted to cooperate with another conical portion (96) supported by the actuating piston (36), said nut (88) comprising a race (94) for an axial ball bearing (98) mounted, with axial play, between said race (94) and a second race formed by an annular member (100) adapted to slide with respect to said actuating piston (36) against a spring (106) when there is a relative movement between the nut (88) and said piston (36) exceeding said axial play.

9. Disc brake according to any of the preceding claims, characterized in that said screw (68) is circumferentially immobilized by means of an elongated crank member (54) cooperating at one of its ends with a groove (72) formed on a recessed portion (70) of said screw (68), said crank member (54) cooperating at its other end with a second groove (52) formed on an axis (50) fixed to a mechanical actuating lever (48).

FIG_1

0 113 261

FIG_2